# NEW EUROPEAN PATENT SPECIFICATION

(11) **EP 1 657 326 B2**
(45) Date of publication and mention of the opposition decision: **11.10.2017**
(45) Mention of the grant of the patent: 17.12.2008
(21) Application number: 05024929.1
(22) Date of filing: 15.11.2005
(51) Int. Cl.: C25D 1/00, C25D 11/02, C25D 11/04, C25D 11/30, C22C 21/02, F02F 3/00, F02F 3/10, F16J 1/02, F16J 1/04, F16J 9/22

(54) **Aluminium-piston at least partially covered with an alumina film**
Aluminium-Kolben, der zumindest teilweise mit einem Aluminiumoxidfilm bedeckt ist
Piston en aluminium au moins partiellement couvert d'un film d'alumine

(30) Priority: 16.11.2004 JP 2004332127
(43) Date of publication of application: 17.05.2006
(73) Proprietor: AISIN SEIKI KABUSHIKI KAISHA, Kariya-shi, Aichi-ken 448-8650 (JP)
(72) Inventor: Hiratsuka, Ichiro Intell. Prop.Dptm., Kariya-shi Aichi-ken, 448-8650 (JP)
(74) Representative: Kramer Barske Schmidtchen Patentanwälte PartG mbB

(56) References cited:
- EP-A- 1 460 151
- EP-A1- 0 867 530
- EP-B1- 0 839 271
- WO-A-00/05493
- DD- - 142 360
- DE-A1- 19 721 730
- RU-C1- 2 056 515
- US-A- 4 752 535
- US-A- 5 225 069
- US-A- 5 996 471
- US-A1- 2003 150 419
- PATENT ABSTRACTS OF JAPAN vol. 2002, no. 02, 2 April 2002 (2002-04-02) -& JP 2001 271704 A (HONDA MOTOR CO LTD), 5 October 2001 (2001-10-05)
- Translation in German & DE 42 09 733 A1 30 September 1993
- KURZE, P.: 'Micro Arc/Spark Anodizing - was ist das?' "GALVANOTECHNIK" August 2003, pages 1 - 15
- SUNDARARAJAN G. ET AL: 'Mechanism underlying the formation of thick alumina coatings through the MAO coating technology' SURFACE AND COATINGS TECHNOLOGY vol. 167, 2003, pages 269 - 277
- YEROKHIN A.L. ET AL: 'Discharge characterization in plasma electrolytic oxidation of aluminium' JOURNAL OF PHYSICS D: APPLIED PHYSICS vol. 36, 2003, pages 2110 - 2120

## Description

The present invention generally relates to a piston according to the preamble of claim 1. More preferably, the present invention pertains to a miniaturized piston having improved properties required for the piston.

In recent years, reductions in weight have been demanded for internal combustion pistons for the purpose of improving fuel economy, and some progress has been made in achieving reductions in size. On the other hand, requirements in respect of properties such as abrasion resistance, seizure resistance, and low friction have become increasingly strict. From these view points, in a conventional piston, light-weight materials such as aluminum and aluminum alloys have been utilized in order to reduce the weight of the piston, and then the surface of the piston has been reinforced in order to enhance properties such as abrasion resistance and seizure resistance.

JPH10-331970A proposes that, if a surface of a piston made of cast aluminum alloy containing Si is covered with a sintered resin film including a solid lubrication agent, aluminum adhesion resistance, peel strength, and abrasion resistance of the piston can all be improved. However, in the piston according to JPH10-331970A, if the temperature rises at the time of combustion, the sintered resin film tends to become carbonized, and satisfactory durability cannot be obtained.

JPH11-022545A and JP2001-73869A propose that, if a ring carrier made of an iron-based sintered alloy or an aluminum alloy is inserted in a top ring groove of a piston made of aluminum alloy, abrasion resistance of the piston can be improved. However, in the pistons according to JPH11-022545A and JP2001-73869A, machining processes for putting a component into a predetermined shape after insertion become difficult, and this causes a rise in the costs of machining. Additional disadvantages are an increase in weight and a deterioration in thermal conductivity.

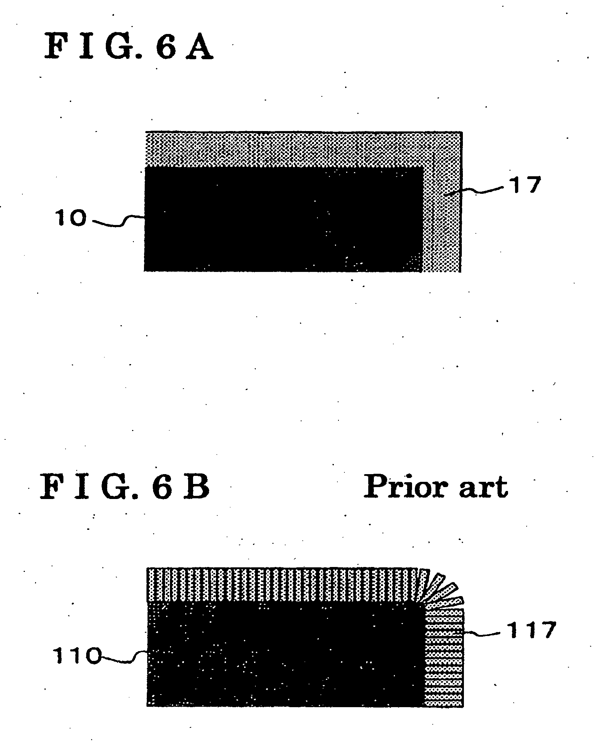

JP2003-013802A and JP2001-271704A propose that, if an anodic oxide film (illustrated in Fig. 6B as 117) is formed on the surface of a piston made of an aluminum alloy, and a lubricant, and/or a thermosetting resin, is infiltrated into fine pores of the anodic oxide film, the abrasion resistance of the piston can be improved. However, in the pistons according to JP2003-013802A and JP2001-271704A, hardness of the anodic oxide film, in terms of Vickers hardness, is approximately HV 400 at a maximum. Accordingly, the pistons according to the above documents fail to satisfy current requirements for miniaturized pistons in terms of both abrasion resistance and seizure resistance. Further, for a piston made of a casting material containing a lot of silicon, the process of formation of the anodic oxide film itself is difficult. Moreover, in the anodic oxide film, crystals grow in a columnar fashion (refer to 110 in Fig. 6B). Accordingly, as the thickness of the film increases, smoothness tends to deteriorate and surface roughness tends to get worse. This in turn results in a reduction in the degree of gas sealability of the piston at the piston ring portion, and/or at a skirt portion.

WO 00/05493 discloses an internal combustion engine, comprising a cylinder in the piston unit made of an aluminium alloy, which should contain not less than 12% of silicon. An internal surface of the cylinder forming part of the combustion chamber, the working surface of the cylinder and the piston crown are covered with an oxide film formed by means of plasma oxidation treatment (micro-arc oxidation) and contains oxides of aluminium and silicon. The external layer of the plasma oxide film is partly removed mechanically, whereby the coating on the cylinder's working surface is less thick than coating on the piston crown. After the mechanical removal the coating has a thickness of 50 to 100µm and a micro-hardness of not less then 15GPa, i.e. a Vickers Hardness of 1530 HV. The coating on the walls of the combustion chamber and on the piston crown is thicker and has a correspondingly lower micro-hardness.

A need exists for a miniaturized piston having improved properties that can satisfy requirements for pistons.

This object is solved by the piston of claim 1.

Additional embodiments of the invention are recited in the dependent claims.

According to the present invention, part or all of the surface of the piston is covered with a plasma electrolytic oxide film, thus enhancing the properties required of the piston in terms of aspects such as abrasion resistance and low Motion.

The foregoing and additional features and characteristics of the present invention will become more apparent from the following detailed description considered with reference to the accompanying drawings, wherein:
Fig. 1 represents a schematic front view illustrating a configuration of a piston according to an embodiment of the present invention;
Fig. 2 represents a graph schematically illustrating relations between load and the degree of wear measured in a block-on-ring type abrasion test;
Fig. 3 represents a graph schematically illustrating changes of frictional coefficients with time measured in the block-on-ring type abrasion test;
Fig. 4 represents the degree of wear at a piston ring groove portion of pistons according to an example of the present invention and a comparative example measured in an engine durability abrasion test;
Fig. 5 represents X-ray diffraction patterns of an oxide film formed on a surface of the piston: (A) according to the example of the present invention having a plasma oxide film; (B) according to a comparative example having an anodic oxide film;
Fig. 6A represents a partial cross-sectional view schematically illustrating a state of the surface of the piston according to the example of the present invention having the plasma oxide film; and
Fig. 6B represents a partial cross-sectional view schematically illustrating a state of the surface of the piston according to the comparative example having the anodic oxide film.

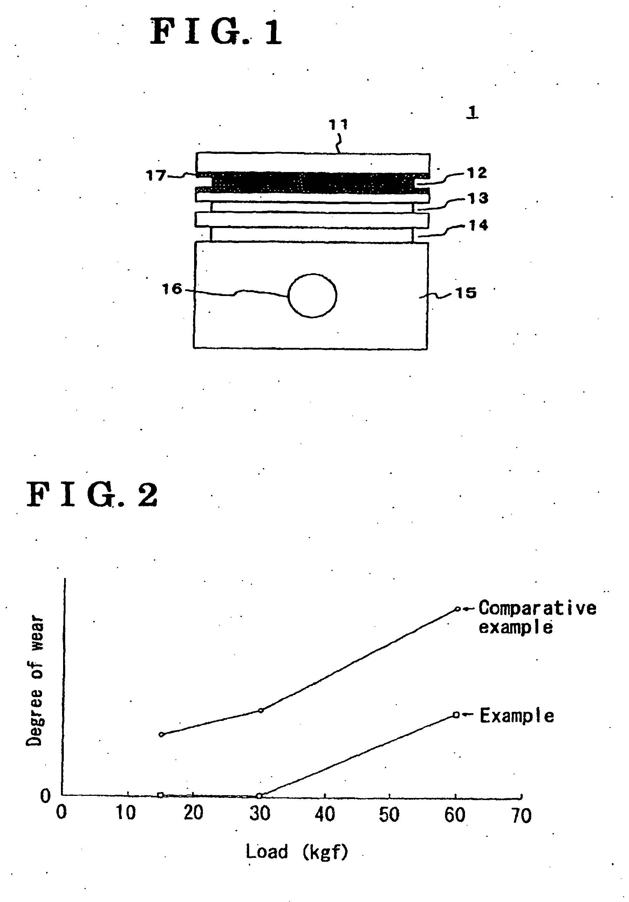

An embodiment of the present invention will be explained with reference to the figures. Fig. 1 represents a schematic front view illustrating a configuration of a piston according to the embodiment of the present invention.

A piston 1 is utilized for an internal combustion engine. The piston 1 is made of a Si-aluminum alloy. However, the piston 1 can also be made of aluminum. The piston 1 includes plural piston ring groove portions (a top ring groove 12, a second ring groove 13 and an oil ring groove 14) formed on a cylinder surface near an upper surface portion 11. The piston 1 includes a skirt portion 15 formed under the oil ring groove 14. The piston 1 includes a pin boss portion 16 formed at a predetermined position of the skirt portion 15 to be connected with a piston pin (not illustrated).

A plasma oxide film 17 is provided onto a surface of the top ring groove 12 of the piston ring groove portions. In addition, the plasma oxide film 17 can be provided onto an entire surface of the piston 1, in addition to the surface of the top ring groove 12. Further, the plasma oxide film 17 can be provided onto any one, or more of the second ring groove 13, the oil ring groove 14, the skirt portion 15, and the pin boss portion 16. The plasma oxide film 17 is formed at a predetermined portion of the piston body 10 that has been made of materials described above by means of plasma oxidation treatment. Fig. 6A represents a diagram illustrating the plasma oxide film 17 formed on the piston body 10. During the plasma oxidation treatment, a film is formed by repeated melting and solidification. Accordingly, the plasma oxide film is uniformly formed on a surface of the piston body 10. Therefore, the film can have a high degree of smoothness and an outstandingly low level of surface roughness. Thus, because a film of a high degree of smoothness can be formed, the level of friction between the piston and an inner surface of a cylinder can be lowered. During the plasma oxidation process, in a case where an aluminum alloy is utilized as a material for the piston, the amount of Si contained in the alloy can be relatively high. In other words, with the plasma oxidation process a satisfactory quality of film can be formed even when the amount of Si contained in the alloy is high. Specifically, the amount of Si contained in the alloy can be set as high as up to approximately 25% by weight. In contrast, with a normal anodic oxidation treatment, aluminum containing Si of up to only approximately 12% by weight can be treated.

Accordingly, in the piston according to the embodiment, it is preferable that the amount of Si contained in the aluminum alloy be equal to, or more than, 12% by weight, and equal to, or less than, 25% by weight. In order to ensure strength of a piston, in general terms it is essential that the amount of Si contained be set at a relatively high level. However, conventionally, when an anodic oxidation process was performed on a piston, it was not possible for the amount of Si to be set at a high level. According to the embodiment, because the piston body 10 is treated by means of the plasma oxidation process, the amount of Si contained can be set at a high level. In other words, by making the amount of Si contained in the aluminum alloy equal to, or more than, 12% by weight, it is possible to further increase the strength of the piston body 10, and in turn this can enhance the rigidity of the piston and thus contribute to making a piston thinner and lighter. Further, by increasing the amount of Si contained, it is possible to achieve a reduction on the degree of thermal expansion of the piston. Accordingly, the extent of a clearance between a cylinder and the piston, and/or a piston pin and the piston, can be reduced, and this in turn can lead to a diminution in the level of vibrations and/or noises generated by the piston. In contrast, when a piston is made of an aluminum alloy containing Si in an amount less than 12% by weight, the piston can acquire only a degree of rigidity equivalent to that of a conventional piston made of an aluminum alloy. In addition, when the amount of Si contained in the aluminum alloy is more than 25% by weight, it becomes difficult to form a plasma oxide film on the piston body 10, and thus tends to result in a reduction in the degree of smoothness of the film.

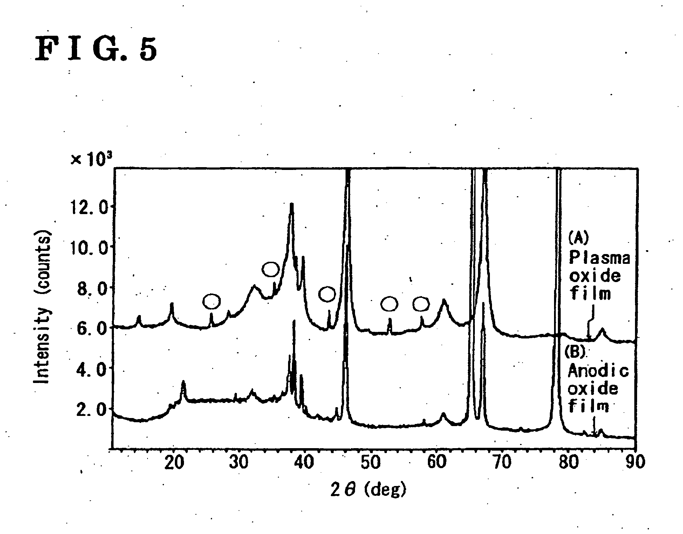

The plasma oxide film 17 contains α-Al₂O₃ (α-alumina) and γ-Al₂O₃ (γ-alumina). In this case, the amount of the α-Al₂O₃ contained in the plasma oxide film 17 can be from 0.5 to 95% by weight. For assuming composition of the plasma oxide film 17, X-ray diffraction patterns of the plasma oxide film 17 and that of a standard reagent (in which the α-Al₂O₃ and the γ-Al₂O₃ are mixed at a predetermined ratio) were compared. For the comparison, area ratios were calculated between a peak at 2θ = 43.31° corresponding to α-Al₂O₃ of each X-ray diffraction pattern, and between each peak at 28 = 45.78° and 66.86° corresponding to γ-Al₂O₃ of each X-ray diffraction pattern. As a result, composition of the plasma oxide film 17 is assumed to be 0.5 to 95% by weight of the α-Al₂O₃ and 5 to 99.5% by weight of the γ-Al₂O₃. The plasma oxide film 17 in which the α-Al₂O₃ is generated at this ratio can be highly hard (HV1200 to 1400). Thus, positions of the piston ring groove portions (in particular, the top ring groove 12) can be closer toward a combustion chamber. In addition, in the plasma oxide film 17, a part of the α-Al₂O₃ is assumed to become amorphous. Accordingly, though the amount of the α-Al₂O₃ detected by the X-ray diffraction is small, it can be assumed that several times the amount of the α-Al₂O₃ described above is contained in actual. With reference to Fig. 5, relatively more intense peaks corresponding to the α-Al₂O₃ (indicated by circles in Fig. 5) are shown in the X-ray diffraction pattern of the plasma oxide film 17 than those shown in the X-ray diffraction pattern of the conventional anodic oxide film.

The thickness of the plasma oxide film 17 is 10 to 20 µm. If the thickness is less than 1 µm, sufficient energy cannot be obtained to generate the α-phase, then the α-phase would not be generated or it would be difficult to generate the α-phase. Accordingly, sufficient strength of the film cannot be obtained. If the thickness of the plasma oxide film 17 is more than 100 µm, the degree of roughness of the film is increased and gas sealability of the film would be lost.

Next, the plasma oxidation treatment will be explained.

In the plasma oxidation treatment, a degreasing process, a rough washing process, a finish washing process, a plasma oxidation process, a washing process, and a drying process are performed in an order described above.

In the degreasing process, for example, the surface of the piston is washed with use of an alkaline solution for removing a working oil or the like adhered on the surface of the piston. In the rough washing process, for example, ultrasonic cleaning is conducted with use of a detergent. In the finish washing process, for example, ultrasonic cleaning is conducted with use of a deionized water (or an ultra pure water). After the finish washing process, a mask is formed on the surface of the piston where the plasma oxide film is not to be formed. In addition, in a case that the plasma oxide film is to be formed on entire surface of the piston, it is not needed to form the mask.

In the plasma oxidation process, the piston is infiltrated in a treating liquid as a work, and the plasma oxidation process is performed. Thus, the plasma oxide film is formed. In this case, the treating liquid is a weak alkaline electrolytic solution containing water as a main component and further containing the following additions on the basis of the water: (1) 1 to 10 g/l of sodium phosphate (Na₃PO₄); (2) 1 to 20 g/l of the water of sodium silicate (Na₂SiO₃); (3) 1 to 10 g/l of the water of sodium hydroxide (NaOH); and (4) 1 to 30 ml/l of hydrogen peroxide solution (containing 30% of H₂O₂). In the plasma oxidation process, the plasma oxide film can be formed by supplying pulsed alternating current of high current density in the treating liquid described above.

In the washing process, for example, ultrasonic cleaning is performed with use of a deionized water (or an ultra pure water). In the drying process, a cleaning liquid (a deionized water or an ultra pure water) is evaporated.

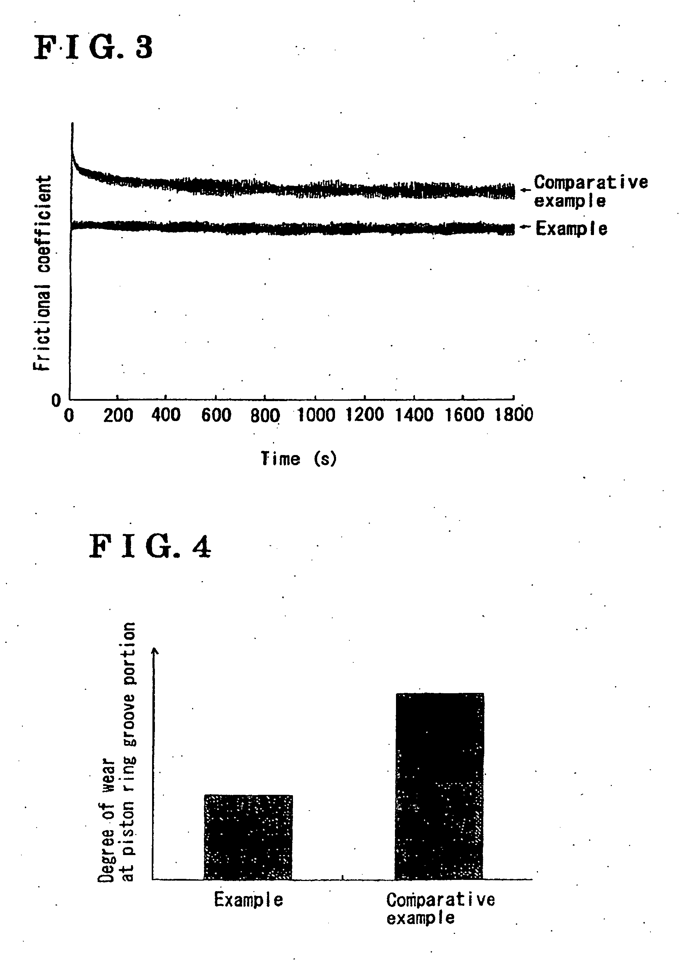

Next, an example will be explained. Tests of the piston according to the example of the present invention will be explained in comparison with a comparative example with reference to the figures. Fig. 2 represents a graph schematically illustrating relations between load and the degree of wear according to block-on-ring type abrasion tests. Fig. 3 represents a graph schematically illustrating changes of friction coefficients with time according to the block-on-ring type abrasion tests. Fig. 4 represents a graph schematically illustrating the degree of wear at the piston ring groove portions of the piston according to engine durability abrasion tests. The tests performed are: (1) block-on-ring type abrasion tests for test pieces; and (2) engine durability abrasion tests of pistons.

Next, the block-on-ring type abrasion tests will be explained. In the block-on-ring type abrasion tests, changes of friction coefficients of the test pieces with time were measured with use of an abrasion unit-testing machine. Then, the degree of wear of each test piece was measured. As the test piece corresponding to the piston according to the example of the present invention, an aluminum alloy (JIS A6061) treated by the plasma oxidation treatment (having the plasma oxide film of 10 µm in thickness) was utilized. As another test piece according to the comparative example, an aluminum alloy (JIS A6061) treated by the anodic oxidation treatment was utilized. Both test pieces according to the example and the comparative example were block shapes (rectangular solid) and had identical dimensions. As a mating part material (ring material) with the test pieces, high-carbon steel (JIS SUJ2) was utilized. The block-on-ring type abrasion tests were performed in an engine oil under the conditions: 15 to 60 kgf of load; constant sliding speed; and constant sliding distance.

With reference to Fig. 2, in the example, the degree of wear decreased by approximately 60% in comparison with that in the comparative example at the condition that the load was 60 kgf. With reference to Fig. 3, in the example, an average friction coefficient decreased by 18% and a fluctuation band of the friction coefficient decreased to one fourth with comparison with that in the comparative example.

Next, the engine durability abrasion tests will be explained. In the engine durability abrasion tests, an engine in which the piston as a test piece was installed was operated for the test under the condition of constant rotational frequency and constant duration. After that, the piston was extracted from the engine. Then, the degree of wear at the piston ring groove portions of the piston was measured. As a piston according to the example of the present invention, a piston was utilized made of a cast aluminum alloy (JIS AC8A) with a piston ring groove portion (top ring groove) treated by the plasma oxidation treatment (thickness of the plasma oxide film was 10 µm). As a piston according to the comparative example, a piston was utilized made of a cast aluminum alloy (JIS AC8A) treated by the anodic oxidation treatment. Pistons according to the example and the comparative example had identical shape and dimensions. With reference to Fig. 4, in the example, the degree of wear at the piston ring groove portion decreased by approximately 60% in comparison with the comparative example.

Further, in the comparative example, surface roughness (average roughness at ten points) measured 16 Rz. On the other hand, in the example according to the present invention, surface roughness (average roughness at ten points) measured 5.5 Rz. Thus, according to the embodiment of the present invention, the piston showed superior degree of smoothness of the surface in comparison with those of conventional pistons.

According to the present invention, a piston is made of a material selected from either one of aluminum and an aluminum alloy. The entire surface or a predetermined portion of the surface of the piston is covered with a plasma oxide film containing α-alumina and γ-alumina.

According to a further aspect of the present invention, the surface of the piston is covered with the plasma oxide film, thus enhancing the properties required of the piston in terms of aspects such as abrasion resistance and low friction. Accordingly, for example, when the piston is utilized for an engine, a desired engine output property can be obtained over a protracted period. Further, because the piston is covered with the plasma oxide film, the piston can have an abrasion resistance property without the need for filtration of the resin or the like onto the plasma oxide film. Accordingly, the piston can also have an outstanding seizure resistance. Further, because the surface of the piston is covered with the plasma oxide film, smoothness of the film can be improved and the degree of surface roughness reduced. Accordingly, for example, when the piston is utilized for an engine, a desired engine output property can be obtained after a short trial period.

According to a further aspect of the present invention, by covering the piston ring groove portion with the plasma oxide film, abrasion resistance of the piston groove portion can be improved. This makes it possible to place the piston ring groove closer to a combustion chamber when the piston is utilized for an engine. Accordingly, it becomes possible to enhance combustion efficiency of the engine, and this in turn leads to a further improvement in fuel economy, further miniaturization and further reductions in weight. In other words, a fuel gas that has entered a clearance defined by three surfaces, the piston, the piston ring, and the cylinder, can be exhausted without being combusted by plug ignitions. When the piston ring goove is positioned closer to the combustion chamber, the clearance can be reduced in size. Thus, the amount of fuel gas exhausted without being combusted decreases, and this leads to improvements in fuel economy.

According to a further aspect of the present invention, a skirt portion and a pin boss portion of the piston are covered with the plasma oxide film. Accordingly, the degree of friction can be reduced. When the piston is utilized for an engine, friction loss on the part of the engine can be decreased and this in turn leads to an improvement in the level of consumption of fuel by the engine.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A piston (1) having a piston body (10) made of aluminium or an aluminium alloy,
at least a predetermined portion of the surface of the piston body (10) being covered with an oxide film (17) formable by means of plasma oxidation treatment,
**characterized in that**
the predetermined portion of the surface is at least one of a piston ring portion (12, 13, 14) for contacting with a piston ring, a piston skirt portion (15) for contacting with a cylinder, and a pin boss portion (16) for contacting with a piston pin,
the amount of γ-alumina contained in the oxide film (17) is equal to or more than 5% by weight and equal to or less than 99.5% by weight,
the amount of α-alumina contained in the oxide film (17) is equal to or more than 0.5% by weight and equal to or less than 95% by weight, and
the oxide film (17) has a Vickers hardness (HV) of between 1200 and 1400,
wherein the thickness of the oxide film (17) is 10 to 20 µm.

2. The piston (1) according to claim 1, wherein
the aluminium alloy contains silicon in an amount of equal to or more than 12% by weight and equal to or less than 25% by weight.

3. A piston (1) according to claim 1 or 2, wherein the oxide film (17) is formable by means of plasma oxidation treatment, which is performed by
supplying pulsed alternating current of high current density to a treating liquid, in which the portion of the surface of the piston (1) to be covered by the plasma electrolytic oxide film (17) is immersed,
wherein the treating liquid is a weak alkaline electrolytic solution containing water as a main component and further containing the following additives on the basis of water
(1) 1 to 10g/l sodium phosphate (Na₃PO₄);
(2) 1 to 20g/l sodium silicate (Na₂SiO₃);
(3) 1 to 10g/l sodium hydroxide (NaOH);
(4) 1 to 30 ml/l hydrogen peroxide solution, containing 30% of H₂O₂.

4. A piston (1) according to any of claims 1 to 3, **characterized in that** said plasma electrolytic oxide film (17) is formed by repeated melting and solidification during its deposition.

## Patentansprüche

1. Kolben (1) mit einem Kolbenkörper (10), der aus Aluminium oder einer Aluminiumlegierung hergestellt ist,
wobei mindestens ein vorgegebener Abschnitt der Oberfläche des Kolbenkörpers (10) mit einem Oxidfilm (17) bedeckt ist, der mittels einer Plasmaoxidationsbehandlung gebildet werden kann,
**dadurch gekennzeichnet, dass**
der vorgegebene Abschnitt der Oberfläche mindestens einer eines Kolbenringabschnitts (12, 13, 14) zum Kontaktieren mit einem Kolbenring, eines Kolbenschaftabschnitts (15) zum Kontaktieren mit einem Zylinder und eines Kolbenbolzenauges (16) zum Kontaktieren mit einem Kolbenbolzen ist,
die Menge an γ-Aluminiumoxid, die in dem Oxidfilm (17) enthalten ist, gleich oder mehr als 5 Gew.-% und gleich oder weniger als 99,5 Gew.-% ist,
die Menge an α-Aluminiumoxid, die in dem Oxidfilm (17) enthalten ist, gleich oder mehr als 0,5 Gew.-% und gleich oder weniger als 95 Gew.-% ist, und
der Oxidfilm (17) eine Vickers-Härte (HV) zwischen 1200 und 1400 aufweist,
wobei die Dicke des Oxidfilms (17) 10 bis 20 µm beträgt.

2. Kolben (1) nach Anspruch 1, wobei
die Aluminiumlegierung Silizium in einer Menge von gleich oder mehr als 12 Gew.-% und gleich oder weniger als 25 Gew.-% enthält.

3. Kolben (1) nach Anspruch 1 oder 2, wobei der Oxidfilm (17) durch eine Plasmaoxidationsbehandlung gebildet werden kann, die durch
Zuführen eines gepulsten Wechselstroms mit einer hohen Stromdichte zu einer Behandlungsflüssigkeit durchgeführt wird, in welcher der Abschnitt der Oberfläche des Kolbens (1), der mit dem Plasma-Elektrolyt-Oxidfilm (17) bedeckt werden soll, eingetaucht ist,
wobei die Behandlungsflüssigkeit eine schwach alkalische Elektrolytlösung ist, die Wasser als eine Hauptkomponente und ferner die folgenden Additive auf der Basis von Wasser enthält:
(1) 1 bis 10 g/Liter Natriumphosphat (Na₃PO₄),
(2) 1 bis 20 g/Liter Natriumsilikat (Na₂SiO₃),
(3) 1 bis 10 g/Liter Natriumhydroxid (NaOH),
(4) 1 bis 30 ml/Liter einer Wasserstoffperoxidlösung, die 30 % H₂O₂ enthält.

4. Kolben (1) nach einem der Ansprüche 1 bis 3, **dadurch gekennzeichnet, dass** der Plasma-Elektrolyt-Oxidfilm (17) durch wiederholtes Schmelzen und Verfestigen während dessen Abscheidung gebildet wird.

## Revendications

1. Piston (1) présentant un corps de piston (10) fait d'aluminium ou d'un alliage d'aluminium, au moins une partie prédéfinie de la surface du corps de piston (10) étant recouverte d'un film d'oxyde (17) pouvant être formé au moyen d'un traitement d'oxydation par plasma, **caractérisé en ce que**
la partie prédéfinie de la surface est au moins l'une parmi une partie bague de piston (12, 13, 14) destinée à entrer en contact avec une bague de piston, une partie jupe de piston (15) destinée à entrer en contact avec un cylindre, et une partie bossage d'axe (16) destinée à entrer en contact avec un axe de piston,
la quantité d'alumine-γ contenue dans le film d'oxyde (17) est égale ou supérieure à 5 % en poids et égale ou inférieure à 99,5 % en poids,
la quantité d'alumine-α contenue dans le film d'oxyde (17) est égale ou supérieure à 0,5 % en poids et égale ou inférieure à 95 % en poids, et
le film d'oxyde (17) présente une dureté Vickers (HV) comprise entre 1200 et 1400,
dans lequel l'épaisseur du film d'oxyde (17) est de 10 à 20 *µ*m.

2. Piston (1) selon la revendication 1, dans lequel l'alliage d'aluminium contient du silicium en une quantité égale ou supérieure à 12 % en poids et égale ou inférieure à 25 % en poids.

3. Piston (1) selon la revendication 1 ou 2, dans lequel le film d'oxyde (17) peut être formé au moyen d'un traitement d'oxydation par plasma, qui est réalisé par la fourniture d'un courant alternatif pulsé de densité de courant élevée à un liquide de traitement, dans lequel la partie de la surface du piston (1) à recouvrir par le film d'oxyde électrolytique par plasma (17) est immergée, dans lequel le liquide de traitement est une solution électrolytique faiblement alcaline contenant de l'eau en tant que constituant principal et contenant en outre les additifs suivants sur la base de l'eau
(1) de 1 à 10 g/l de phosphate sodique (Na₃PO₄) ;
(2) de 1 à 20 g/l de silicate de sodium (Na₂SiO₃) ;
(3) de 1 à 10 g/l d'hydroxyde de sodium (NaOH) ;
(4) de 1 à 30 ml/l d'une solution de peroxyde d'hydrogène, contenant 30 % de H₂O₂.

4. Piston (1) selon l'une quelconque des revendications 1 à 3, **caractérisé en ce que** ledit film d'oxyde électrolytique par plasma (17) est formé par fusion et solidification répétées pendant son dépôt.
